# EUROPÄISCHE PATENTSCHRIFT

(11) **EP 0 345 207 B1**
(45) Veröffentlichungstag und Bekanntmachung des Hinweises auf die Patenterteilung: **25.08.1993**
(21) Anmeldenummer: 89730133.9
(22) Anmeldetag: 30.05.1989
(51) Int. Cl.: B01F 3/04, C02F 1/20

(54) **Begasungseinrichtung**
Aeration device
Dispositif d'aération

(30) Priorität: 03.06.1988 DE 3819305
(43) Veröffentlichungstag der Anmeldung: 06.12.1989
(73) Patentinhaber: Ott, Rita, 30855 Langenhagen (DE)
(72) Erfinder: Ott, Wilfried, D-3012 Langenhagen (DE)
(74) Vertreter: Thömen, Uwe, Dipl.-Ing.

(56) Entgegenhaltungen:
- EP-A- 0 163 821
- DE-A- 3 319 161
- DE-A- 3 514 028
- DE-A- 3 624 580

## Beschreibung

Die Erfindung betrifft eine Begasungseinrichtung nach dem Oberbegriff des Anspruchs 1.

Begasungseinrichtungen werden vorzugsweise dazu verwendet, bei der Klärung von Abwässern Luft in das Abwasser einzuleiten, um aerobe Abbauprozesse der im Abwasser befindlichen Abfallstoffe zu ermöglichen. Da das Gas stets leichter als die Flüssigkeit ist, muß es vom Grund des Behälters oder Beckens her in die Flüssigkeit eingeleitet werden. Diese Einleitung muß möglichst flächendeckend erfolgen, damit die Gasblasen nicht ungelöst die Flüssigkeit durchwandern und an der Oberfläche austreten. In diesem Fall wäre nicht die erforderliche Sättigung der Flüssigkeit erreichbar.

Bei Einbringung eines Gases besteht jedoch das Problem, daß die mit dem Gas gefüllten Begasungseinrichtungen, wenn es sich hier um dünnwandige, vollständig mit dem einzuleitenden Gas gefüllte Rohre handelt, durch den Auftrieb nach oben treiben würden. In diesem Fall müßte eine Verankerung am Boden vorgenommen werden. Um eine Begasungseinrichtung jedoch ohne solche Verankerungen oder Gewichte im Becken eines Behälters betreiben zu können, wurden bereits konstruktive Maßnahmen getroffen, um das von dem Gas ausgefüllte Volumen der Begasungseinrichtung zu vermindern.

So ist aus der DE-OS 34 18 548 eine Begasungseinrichtung bekannt, bei der ein rohrförmiger Einleitungskörper an einem Ende offen und am anderen Ende geschlossen ist und dadurch mit der zu begasenden Flüssigkeit geflutet werden kann. Dieser Einleitungskörper trägt am geschlossenen Ende eine relativ dicke Wandung, durch die ein Gaszuführungskanal schräg hindurchgeführt ist. Außerdem ist in der dicken Wandung ein Hohlraum vorhanden, in die eine Spindel mit einer Mutter zur Befestigung des Einleitungskörpers eingelassen ist.

Der relativ komplizierte Aufbau des bekannten Einleitungskörpers erfordert daher die getrennte Herstellung des rohrförmigen Einleitungskörpers und des Abschlußteils, welches die dicke Wandung bildet. Die Herstellung dieses als Massenartikel verwendeten Einleitungskörpers ist verhältnismäßig aufwendig, da neben der Herstellung der Einzelteile und dem Einbringen der Bohrung für den Gaszuführungskanal auch beide Teile zusammengesetzt und verbunden werden müssen.

Durch die DE-A-3 319 161 ist ebenfalls eine Begasungseinrichtung bekannt, mit welcher eine Reduzierung des Auftriebs erzielt wird und mit welcher eine Vergrößerung der Begasungsoberfläche zur Leistungssteigerung möglich ist. Eine Verankerung am Boden ist dabei nicht erforderlich.

Die bekannte Begasungseinrichtung besitzt einen einer Gaszufuhr zugeordneten Grundkörper, der Öffnungen für einen Gasdurchtritt aufweist. Der Grundkörper wird durch eine Membrane umschlossen, die eine Perforation für einen Austritt des Gases in die Flüssigkeit besitzt. Die Öffnungen für den Gasdurchtritt sind dabei im Bereich einer Vorkammer angeordnet, deren Volumen kleiner ist als das gesamte Volumen des Grundkörpers. Die Perforation der die Vorkammer umhüllenden Membrane ist im wesentlichen ausschließlich außerhalb des Bereichs der Vorkammer freigegeben.

Bei dieser bekannten Begasungseinrichtung ist der Grundkörper lösbar an einem die Gaszufuhr bildenden Gaszuführrohr befestigt. Die Vorkammer ist ferner durch eine Trennwand von dem Flutungsraum abgetrennt. Schließlich umfaßt die bekannte Begasungseinrichtung noch einen Spannbolzen, der die Trennwand durchgreift und an dieser befestigt ist.

Mit Hilfe des genannten Spannbolzens, der ein Zentrierrohr durchdringt, wird die Möglichkeit geschaffen, die Begasungseinrichtung an einer zentralen Gaszuleitung zu befestigen.

Die bekannte Begasungseinrichtung umfaßt neben dem Grundkörper noch weitere Bestandteile und ist daher nicht einteilig ausgebildet. Somit gestaltet sich auch hier die Herstellung der Begasungseinrichtung aufwendig.

Ferner ist darauf hinzuweisen, daß die bekannte Begasungseinrichtung keinen Befestigungsstutzen besitzt, und daß die Vorkammer nicht dadurch gebildet wird, daß eine Bohrung in ein volles Material eingebracht wird, d.h., es ist keine Sackbohrung vorhanden, die als Gaszuführungskanal dient.

Der Erfindung liegt die Aufgabe zugrunde, eine Begasungseinrichtung nach dem Oberbegriff des Anspruchs 1 so zu verbessern, daß die Ausgestaltung des Gaszuführungskanals vereinfacht wird und somit die Voraussetzungen für eine rationelle und materialsparende Herstellung geschaffen wird.

Diese Aufgabe wird durch eine Begasungseinrichtung nach dem Oberbegriff des Anspruchs 1 durch die im kennzeichnenden Teil angegebenen Merkmale gelöst.

Bei dieser Ausgestaltung sind der Einleitungskörper sowie der Befestigungsstutzen durchgehend axial ausgeführt, wobei sowohl der Einleitungskörper als auch der Befestigungsstutzen mit einer relativ dünnen Wandstärke auskommen. Dabei ist die Verlängerung des Befestigungsstutzens durch eine Stirnwand begrenzt, so daß der geflutete Raum des Einleitungskörpers von dem Gaszuführungskanal getrennt ist. Der Auslaß des Gaszuführungskanals befindet sich in der Wandung der innerhalb des Befestigungsstutzens und in Verlängerung dessen gebildeten Sackbohrung. Da sowohl der Einleitungskörper als auch der Befestigungsstutzen einen sehr einfachen geometrischen Aufbau besitzen, ist eine einfache, praktisch in einem Arbeitsgang durchführbare Herstellung möglich, z.B. durch Strangpressen. Die Wandstärke kann nach dem für die Stabilität gerade erforderlichen Maß beschaffen sein, ohne daß für eine schräge Führung eines Gaszuführungskanals eine unnötig dicke und daher zusätzliches Material benötigende Wandung erforderlich wäre. Außerdem kann ein sehr großer Querschnitt erzielt werden, so daß bei der Einleitung des Gases nur geringe Störmungsverluste überwunden werden müssen, um die Einspeisung daher nur eine geringe Pumpleistung erfordert.

Bei der Erfindung ist der Einleitungskörper zusammen mit dem Befestigungsstutzen einstückig ausausgeführt.

Durch diese Maßnahme wird die Herstellung außerordentlich vereinfacht und verbilligt, was sich bei dem hohen Bedarf an Einleitungsrohren bei einer Begasungseinrichtung z.B. für ein Belüftungsbecken einer Kläranlage sehr kostengünstig auswirkt. Auch können auf diese Weise Nahtstellen entfallen, die andernfalls Ursache für Undichtigkeiten oder Brüche sein könnten.

Eine vorteilhafte Ausgestaltung sieht vor, daß sich vom Auslaß des Gaszuführungskanals bis vor das freie Ende des Einleitungskörpers eine Längsnut erstreckt.

Durch diese Längsnut kann das Gas auch bis zum freien Ende des Einleitungskörpers herangeführt werden und dann in die Flüssigkeit übertreten. Es ergibt sich damit ein über die axiale Länge des Einleitungskörpers gleichmäßiger Begasungsstrom.

In Weiterbildung dieser Ausführung ist die Perforation in der Membrane nur außerhalb des Bereichs der Längsnuten vorgesehen.

Dadurch kann das Gas zunächst in einem sich durch den Gasüberdruck zwischen der Mantelfläche des Einleitungskörpers und der Membrane gebildeten Ringraum ausdehnen und dann großflächig in die Flüssigkeit übertreten. Ein unmittelbarer Übertritt des Gases von der Längsnut in die Flüssigkeit, die dann auf einen sehr schmalen Bereich begrenzt wäre, wird dadurch vermieden. Außerdem legt sich bei Beendigung der Einleitung von Gas die Membrane so an die Mantelfläche des Einleitungskörpers an, daß ein Rückfluß in den Gaszuführungskanal nach Art eines Rückschlagventils verhindert wird. Bei erneuter Begasung braucht somit nicht die Flüssigkeit aus dem Gaszuführungskanal verdrängt werden und das Gas kann bereits zu Beginn des Begasungsvorganges großflächig austreten.

Bei einer praktischen Ausführung weist der Befestigungsstutzen ein gegenüber der Mantelfläche des Einleitungskörpers im Durchmesser reduziertes Gewinde auf und der Übergang vom Gewinde zur Mantelfläche ist als Anschlagfläche ausgebildet.

Diese Ausgestaltung des Befestigungsstutzens ermöglicht es, ohne zusätzlich eingegossene Gewindebolzen, wie sie beim Stand der Technik erforderlich sind, den Einleitungskörper an einem zentralen Gasversorgungsverteiler zu befestigen. Dabei könnte im einfachsten Fall der zentrale Gasversorgungsverteiler mit einem Innengewinde versehen sein, in das der Befestigungsstutzen hineingeschraubt wird. Eine Abdichtung läßt sich dann über das Gewinde sowie die Anschlagflächen erzielen.

Eine Weiterbildung sieht vor, daß die Mantelfläche im Bereich zwischen der Anschlagfläche und dem Auslaß als Schlüsselfläche ausgebildet ist.

Diese Schlüsselflächen bieten in unmittelbarer Nähe des Gewindes einen Angriffspunkt für ein Montage- oder Demontagewerkzeug, mit dem ein höheres Drehmoment auf den Einleitungskörper beim Verschrauben oder Lösen ausgeübt werden kann, als bei Drehen mit der Hand, zumal in diesem Fall auch die Membrane ein unmittelbares Einleiten des von der Hand ausgeübten Druckes und Drehmomentes auf den Einleitungskörper erschwert.

Vorzugsweise besteht der Einleitungskörper zusammen mit dem Befestigungsstutzen aus hoch schlagfestem Kunststoff, vorzugsweise aus Hochdruckpolyethylen (HDPE).

Dieser Werkstoff läßt sich beim Spritzgießen gut verarbeiten, ist chemisch gegen aggressive Flüssigkeiten resistent und ist auch im rauhen Einsatz, z.B. bei der Einbringung in Belüftungsbecken, bei der Montage und Demontage sowie bei der Lagerung mechanisch haltbar.

Bei einer praktischen Ausgestaltung ist der Einleitungskörper mit einem zentralen Gasversorgungsverteiler verschraubt.

Dadurch besteht die Möglichkeit, das er zu mehreren Einheiten zum Aufbau einer flächendeckenden Begasungseinrichtung erweitert wird, wobei hier eine leichte Montage und Demontage möglich ist.

In weiterer Ausgestaltung weist der Gasversorgungsverteiler parallele Seitenwände auf, in die mehrere einander gegenüberliegende Bohrungen eingelassen sind. Dabei durchgreifen die Befestigungsstutzen zweier gegenüberliegender Einleitungskörper mit ihren Gewinden die Bohrungen, wobei die Gewinde über eine gemeinsame Muffe verbunden sind. Die Anschlagflächen werden dabei gegen die Seitenwände des Gasversorgungsverteilers verspannt. Zur Gasversorgung ist in der Wand der Muffe eine Gasdurchtrittsöffnung vorgesehen.

Diese Weiterbildung ermöglicht es, eine Begasungseinrichtung der erfindungsgemäßen Art mit mehreren Einleitungsrohren sehr zügig zu montieren und demontieren. Dabei dienen die einander gegenüberliegenden Einleitungsrohre jeweils zur Befestigung und Abdichtung des anderen am zentralen Gasversorgungsverteiler.

Dessen Seitenwände benötigen nicht die für die Aufnahme eines Innengewindes erforderliche Dicke, vielmehr dienen Sie zur Abstützung der durch eine Muffe zusammengehaltenen und gegeneinander verschraubten Gewinde der Gewindestutzen der Einleitungskörper.

Weiterbildungen und vorteilhafte Ausgestaltungen der Erfindung ergeben sich aus den Ansprüchen, der Beschreibung und der Zeichnung, die ein Ausführungsbeispiel veranschaulicht.

In der Zeichnung zeigen:
- Fig. 1: einen Längsschnitt durch ein Einleitungsrohr der erfindungsgemäßen Begasungseinrichtung,
- Fig. 2: einen Schnitt durch die Schnittlinie AB gemäß Fig. 1,
- Fig. 3: eine Draufsicht auf einen Teil des in Fig. 1 dargestellten Einleitungskörpers, und
- Fig. 4: eine geschnittene Ansicht eines Gasversorgungsverteilers mit davon abgehenden Einleitungskörpern.

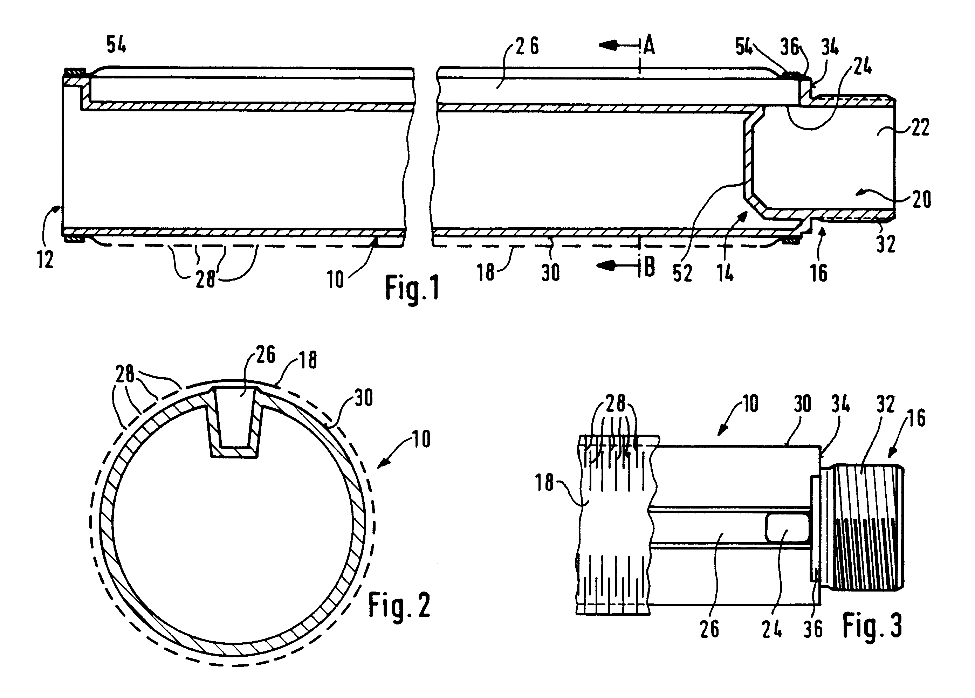

In Fig. 1 ist ein rohrförmiger Einleitungskörper 10 dargestellt, wie er als Teil einer Begasungseinrichtung mit mehreren Einleitungskörpern z.B. auf den Grund eines Belüftungsbeckens einer Kläranlage abgesenkt wird. Der Einleitungskörper 10 ist an seinem freien Ende 12 offen und am anderen Ende 14 geschlossen. Dort trägt er einen Befestigungsstutzen 16, in dem im Inneren ein Gaszuführungskanal 20 angeordnet ist.

Der Gaszuführungskanal 20 durchgreift als axiale Sackbohrung 22 den Befestigungsstutzen 16 und ist durch eine Wand 52 vom Innenraum des rohrförmigen Einleitungskörpers 10 getrennt.

Von der Sackbohrung 22 führt ein Auslaß 24 in eine Längsnut 26, die sich bis vor das freie Ende 12 des Einleitungskörpers 10 erstreckt.

Eine Membrane 18 ist an ihren freien Enden mittels Schellen 54 auf der Mantelfläche 30 des Einleitungskörpers 10 befestigt. Sie sorgt einmal für eine Verteilung des Gases um den Einleitungskörper herum, so daß der Übergang des Gases in die Flüssigkeit auf einer möglichst großen Fläche erfolgt.

Bei Abschalten des Gasstromes legt sich die Membrane 18 aufgrund ihrer Eigenelastizität und des Außendrucks der Flüssigkeit an die Mantelfläche 30 des Einleitungskörpers 10 an. Dabei ist eine Perforation 28 in der Membrane 18 nur außerhalb des Bereichs der Längsnut 26 vorgesehen. Bei der Begasung wird durch den Überdruck die Membrane 18 leicht abgehoben, so daß sich zwischen ihr und der Mantelfläche 30 des Einleitungskörpers 10 ein Ringraum bildet. In diesen Ringraum kann sich nun das über die Längsnut 26 ausbreitende Gas um den Einleitungskörper 10 herum verteilen und gleichmäßig durch die Perforation 28 der Membrane 18 in die Flüssigkeit übertreten.

Anhand des in Fig. 2 dargestellten Schnitts AB ist der zwischen der Membrane 18 und der Mantelfläche 30 des Einleitungskörpers 10 gebildete Ringraum erkennbar, in dem sich das aus der Längsnut 26 austretende Gas ausbreiten kann. Dabei ist auch angedeutet, daß sich die Perforation 28 nur außerhalb des Bereichs der Längsnut 26 befindet.

Bei Abschalten des Gasstromes würde sich unter dem Druck der Flüssigkeit die Membrane 18 so an den Einleitungskörper 10 anlegen, daß die Längsnut 26 vollständig verschlossen ist und kein Rückstrom der Flüssigkeit in die Längsnut oder den weiteren Gaszuführungskanal 20 gelangen kann.

Zur weiteren Veranschaulichung der erfindungsgemäßen Begasungseinrichtung zeigt Fig. 3 eine Draufsicht auf einen Teil des in Fig. 1 dargestellten Einleitungskörpers. Dabei ist im linken Teil der Fig. 3 die Membrane 18 mit ihrer Perforation 28 sichtbar. Diese ist im Bereich der Längsnut 26 unterbrochen. Weiter rechts ist die Oberfläche des Einleitungskörpers 10 sichtbar. Hier erkennt man den radialen Auslaß 24, der in die axiale Sackbohrung hineinführt sowie die sich vom radialen Auslaß 24 zum hier nicht dargestellten freien Ende des Einleitungskörpers verlaufende Längsnut 26.

Am rechten Teil des Einleitungskörpers 10 ist, wie die Fig. 1 und 3 zeigen, ein Befestigungsstutzen 16 angebracht. Dieser weist ein gegenüber der Mantelfläche 30 des Einleitungskörpers 10 im Durchmesser reduziertes Gewinde 32 auf. Der Übergang vom Gewinde 32 zur Mantelfläche 30 ist als Anschlagfläche 34 ausgebildet. Mittels dieses Gewindes 32 kann der Einleitungskörper 10 abdichtend verschraubt werden.

Zur Erleichterung der Montage sind im Bereich zwischen der Anschlagfläche 34 und dem Auslaß Teile der Mantelfläche 30 als Schlüsselfläche 36 ausgebildet. Mit einem an diesen Schlüsselflächen 36 angreifenden Montagewerkzeug kann das für die Montage und Demontage erforderliche Drehmoment aufgebracht werden, ohne daß eine Beschädigung der Membrane 18 zu erwarten ist.

Wie die konstruktive Ausgestaltung des Einleitungskörpers 10 erkennen läßt, kann dieser einstückig im Strangpreß- oder Spritzverfahren hergestellt werden. Dies wird im wesentlichen dadurch ermöglicht, daß sich die meisten Wandungen in axialer Richtung erstrecken und nur wenige Wandungen radial vorstehen. In diesem Zusammenhang läßt sich auch die Wandstärke auf das Maß begrenzen, das für die mechanische Stabilität erforderlich ist. Material und Gewicht läßt sich auf diese Weise einsparen.

Die zur Verringerung der Auftriebskräfte am offenen Ende 12 eindringende Flüssigkeit trägt dazu bei, daß der Einleitungskörper 10 soweit geflutet werden kann, daß der verbleibende vom Gas eingenommene Raum demgegenüber kaum noch einen bedeutenden Auftrieb bewirkt.

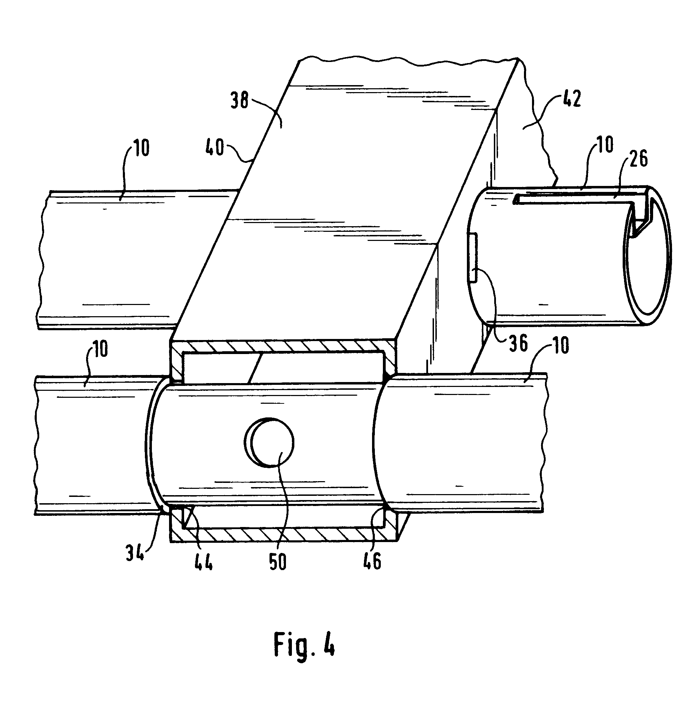

Fig. 4 zeigt schließlich eine Begasungseinrichtung, bei der mehrere Einleitungskörper 10 mit einem zentralen Gasversorgungsverteiler 38 verbunden sind. Der Gasversorgungsverteiler 38 besitzt parallele Seitenwände 40 und 42, in die mehrere einander gegenüberliegende Bohrungen 44 und 46 eingelassen sind. Zur Montage wird zunächst eine Muffe 48 auf den Befestigungsstutzen 16 eines der Einleitungskörper 10 aufgeschraubt. Die Bohrungen 44 und 46 in den parallelen Seitenwänden 40 und 42 des zentralen Gasversorgungsverteilers 38 sind so groß, daß die Muffe 48 gerade durch die Bohrungen 44 und 46 hindurchgesteckt werden kann, während die Mantelfläche 30 des Einleitungskörpers 10 einen größeren Durchmesser als die Bohrungen 44 und 46 besitzen, so daß die Anschlagfläche 34 des Einleitungskörpers 10 gegen eine der Seitenwände 40, 42 zur Anlage kommt.

Nun wird von der anderen Seite her ein Einleitungskörper 10 mit seinem Befestigungsstutzen 16 durch die Bohrung 44, 46 gesteckt und in die Muffe 48 geschraubt. Im zusammengeschraubten Zustand werden die beiden Einleitungskörper 10 durch die Muffe 48 an ihrem Befesitungsstutzen 16 verbunden und gegen die Seitenwände 40 und 42 des Gasversorgungsverteilers 38 verspannt.

Zur Montage und Demontage können die Einleitungskörper 10 an ihrem Schlüsselflächen 36 mit entsprechend ausgebildeten Montagewerkzeugen festgezogen oder aufgedreht werden. Die Gaszuführung zu den Gaszuführungskanälen 20 im Einleitungskörper 10 erfolgt durch eine Gasdurchtrittsöffnung 50 in der Muffe 48.

## Patentansprüche

1. Begasungseinrichtung zur Einbringung eines Gases in eine Flüssigkeit, insbesondere in ein zu behandelndes Abwasser, wobei die Begasungseinrichtung wenigstens einen rohrförmigen Einleitungskörper (10) umfaßt, der an seinem freien Ende (12) offen und an dem anderen Ende (14) geschlossen ist und dort einen Befestigungsstutzen (16) trägt, sowie eine den Einleitungskörper (10) umgebende perforierte, schlauchförmige Membrane (18) und einen im Bereich der Membrane ausmündenden Gaszuführungskanal (20), dadurch gekennzeichnet, daß der Gaszuführungskanal (20) den Befestigungsstutzen (16) als axiale Sackbohrung (22) durchgreift und im Bereich der Membrane (18) wenigstens einen radialen Auslaß (24) besitzt, und daß der Einleitungskörper (10) zusammen mit dem Befestigungsstutzen (16) einstückig ausgeführt ist.

2. Begasungseinrichtung nach Anspruch 1, dadurch gekennzeichnet, daß sich vom Auslaß (24) des Gaszuführungskanals (20) bis vor das freie Ende (12) des Einleitungskörpers (10) eine Längsnut (26) erstreckt.

3. Begasungseinrichtung nach Anspruch 2, dadurch gekennzeichnet, daß die Perforation (28) in der Membrane (18) nur außerhalb des Bereichs der Längsnut (26) vorgesehen ist.

4. Begasungseinrichtung nach einem oder mehreren der Ansprüche 1 - 3, dadurch gekennzeichnet, daß der Befestigungsstutzen (16) ein gegenüber der Mantelfläche (30) des Einleitungskörpers (10) im Durchmesser reduziertes Gewinde (32) aufweist, und daß der Übergang vom Gewinde (32) zur Mantelfläche (30) als Anschlagfläche (34) ausgebildet ist.

5. Begasungseinrichtung nach Anspruch 4, dadurch gekennzeichnet, daß die Mantelfläche (30) im Bereich zwischen der Anschlagfläche (34) und dem Auslaß (24) als Schlüsselfläche (36) ausgebildet ist.

6. Begasungseinrichtung nach einem oder mehreren der Ansprüche 1 - 5, dadurch gekennzeichnet, daß der Einleitungskörper (10) zusammen mit dem Befestigungsstutzen (16) aus hoch schlagfestem Kunststoff, vorzugsweise aus Hochdruckpolyethylen (HDPE) besteht.

7. Begasungseinrichtung nach einem oder mehreren der Ansprüche 4 - 6, dadurch gekennzeichnet, daß der Einleitungskörper (10) mit einem zentralen Gasversorgungsverteiler (38) verschraubt ist.

8. Begasungseinrichtung nach Anspruch 7, dadurch gekennzeichnet, daß der Gasversorgungsverteiler (38) parallele Seitenwände (40, 42) aufweist, in die mehrere einander gegenüberliegende Bohrungen (44, 46) eingelassen sind, daß die Befestigungsstutzen (16) zweier gegenüberliegender Einleitungskörper (10) mit ihrem Gewinden (32) die Bohrungen (44, 46) durchgreifen, wobei die Gewinde (32) über eine gemeinsame Muffe (48) verbunden und die Anschlagflächen (34) gegen die Seitenwände (40, 42) des Gasversorgungsverteilers (38) verspannt sind, und daß in der Wand der Muffe (48) eine Gasdurchtrittsöffnung (50) vorgesehen ist.

## Claims

1. Aeration device for introducing a gas into a liquid, especially into a waste water to be treated, wherein the aeration device comprises at least one tubular feed member (10), which is open at its free end (12) and is closed at the other end (14) and carries there a connecting piece (16), and comprises also a perforated, tubular membrane (18) surrounding the feed member (10) and a gas feed duet (20) leading out in the region of the membrane, characterized in that the gas feed duct (20) passes through the connecting piece (16) as an axial blind bore (22) and has at least one radial outlet (24) in the region of the membrane (18), and that the feed member (10) is constructed in one piece together with the connecting piece (16).

2. Aeration device according to Claim 1, characterized in that a longitudinal groove (26) extends from the outlet (24) of the gas feed duct (20) to just before the free end (12) of the feed member (10).

3. Aeration device according to Claim 2, characterized in that the perforations (28) in, the membrane (18) are provided only outside the region of the longitudinal groove (26).

4. Aeration device according to one or more of Claims 1 to 3, characterized in that the connecting piece (16) has a threaded zone (32) of smaller diameter than the cylindrical surface (30) of the feed member (10) and that the transition from the threaded zone (32) to this cylindrical surface (30) is constricted as an abutment surface (34).

5. Aeration device according to Claim 4, characterized in that the cylindrical surface (30) is formed, in the region between the abutment surface (34) and the outlet (24), as a key face (36).

6. Aeration device according to one or more of Claims 1 to 5, characterized in that the feed member (10) together with the connecting piece (16) is of highly impact-resistant plastics material, preferably of high-pressure polyethylene (HPPE).

7. Aeration device according to one or more of Claims 4 to 6, characterized in that the feed member (10) is screwed to a central gas supply header (38).

8. Aeration device according to Claim 7, characterized in that the gas supply header (38) has parallel side walls (40, 42), in which a plurality of mutually opposite bores (44, 46) are formed, that the connecting pieces (16) of two mutually opposite feed members (10) pass with their threaded zones (32) through the bores (44, 46), the threaded zones (32) being connected together by a common sleeve (48) and the abutment surfaces (34) being tightened onto the side walls (40, 42) of the gas supply leader (38), and that a gas passage opening (50) is provided in the wall of the sleeve (48).

## Revendications

1. Dispositif d'aération servant à introduire un gaz dans un liquide, en particulier dans des eaux usées à traiter, comprenant un corps d'introduction tubulaire (10) qui est ouvert à son extrémité libre (12) et fermé à l'autre extrémité (14) où il porte une tubulure de fixation (16), ainsi qu'une membrane perforée (18) en tuayu souple entourant le corps d'introduction (10) et un canal d'amende de gaz (20) débouchant dans la zone de la membrane, caractérisé en ce que le canal d'amenée de gaz (20) pénètre dans la tubulure de serrage (16) comme un trou borgne (22) et possède, dans la zone de la membrane (18), au moins une sortie radiale (24), et en ce que le corps d'introduction (10) ne forme qu'une pièce avec la tubulure de fixation (16).

2. Dispositif d'aération suivant la revendication 1, caractérisé en ce qu'une rainure longitudinale (26) va de la sortie (24) du canal d'amenée de gaz (20) jusque devant l'extrémité libre (12) du corps d'introduction (10).

3. Dispositif d'aération suivant la revendication 2, caractérisé en ce que la perforation (28) de la membrane (18) n'est prévue qu'en dehors de la zone de la rainure longitudinale (26).

4. Dispositif d'aération suivant l'une ou plusieurs des revendications 1 à 3, caractérisé en ce que la tubulure de fixation (16) présente un filetage (32) d'un diamètre plus petit que celui de la surface de l'enveloppe (30) du corps d'introduction (10) et en ce que le passage du filetage (32) à la surface de l'enveloppe (30) est prévu comme une surface de butée (34).

5. Dispositif d'aération suivant la revendication 4, caractérisé en ce que, dans la zone entre la surface de butée (34) et la sortie (24), la surface de l'enveloppe (30) est prévue comme une surface à clé (36).

6. Dispositif d'aération suivant l'une ou plusieurs des revendications 1 à 5, caractérisé en ce que le corps d'introduction (10) ne formant qu'une pièce avec la tubulure de fixation (16) est en matière plastique très résistante aux chocs, de préférence en polyéthylène haute pression (HDPE).

7. Dispositif d'aération suivant l'une ou plusieurs des revendications 4 à 6, caractérisé en ce que le corps d'introduction (10) est vissé à un distributeur central d'alimentation en gaz (38).

8. Dispositif d'aération suivant la revendication 7, caractérisé en ce que le distributeur d'alimentation en gaz (38) présente des parois latérales parallèles (40, 42), dans lesquelles se trouvent plusieurs trous (44, 46) opposés les uns aux autres, en ce que les tubulures de fixation (16) de deux corps d'introduction (10) opposés passent avec leur filetage (32) dans les trous (44, 46), les filetages (32) étant reliés par un manchon commun (48) et les surfaces de butée (34) étant calées contre les parois latérales (40, 42) du distributeur d'alimentation (38), et en ce que, dans la paroi du manchon (48), est prévue une ouverture pour le passage du gaz (50).
